# EUROPEAN PATENT SPECIFICATION

(11) **EP 3 897 337 B1**
(45) Date of publication and mention of the grant of the patent: **07.09.2022**
(21) Application number: 19816272.9
(22) Date of filing: 03.12.2019
(51) Int. Cl.: A47L 15/42, D06F 39/12, F16M 7/00, F25D 23/00

(54) **A HOUSEHOLD APPLIANCE HAVING REINFORCED AND HEIGHT ADJUSTABLE FEET MECHANISM**
HAUSHALTSGERÄT MIT VERSTELLBAREN UND HÖHENVERSTELLBAREN FUSSMECHANISMEN
APPAREIL ÉLECTROMÉNAGER AYANT UN MÉCANISME DE PIEDS RENFORCÉ ET RÉGLABLE EN HAUTEUR

(30) Priority: 21.12.2018 TR 201820104
(43) Date of publication of application: 27.10.2021
(73) Proprietor: Arçelik Anonim Sirketi, 34445 Istanbul (TR)
(72) Inventor: TUYSUZ, Murat, 34950 Istanbul (TR); CELIK, Husamettin, 34950 Istanbul (TR); BAYSAK, Deniz, 34950 Istanbul (TR); GUNDOGAN, Deniz, 34950 Istanbul (TR); YETILMEZSOY, Murat, 34950 Istanbul (TR)
(86) International application number: PCT/EP2019/083462
(87) International publication number: WO 2020/126470

(56) References cited:
- EP-A1- 2 468 136
- EP-B1- 2 468 136
- EP-B1- 2 991 534
- WO-A1-2004/107914
- WO-A1-2015/078511
- CN-A- 108 049 123

## Description

The present invention relates to a household appliance, in particular to a household appliance having reinforced and height adjustable foot mechanism.

In household appliances such as dishwashers, washing machines or cooling appliances, the feet on which the body of the household appliance is carried and supported may require height adjustment. The household appliance is typically balanced by leveling the feet. Particularly, built-in household appliances may require height adjustment after being placed in a cabin.

The height adjustment of the feet can be made by rotating the foot around its axis by means of a wrench. In most cases, adjustment of the height of the rear feet is enough for accurately leveling the household appliance. In case of need for repair or maintenance of the household appliance, or if adjusting the height of the appliance is required, for instance due to change of place, interfering with the housing by way of removing a plurality of bearings may become an unnecessarily long practice on the part of the maintenance staff.

During the height adjustment, the feet may be rotated more than the total length of the vertical shaft therefore creating the problem of the feet being removed from the body by accident. The vertical shaft that is carrying the household appliance may be damaged due to the heavy weight of the household appliance. Therefore a practically quick, fail proof and safe manner of height adjustment is desirable for avoiding longer maintenance times. To this end, a household appliance readily and instantly connectible with a foot mechanism, the latter being height-adjustable in a rotatable manner such that its height is adjusted externally wherein the foot mechanism is fail proof and safe to use is required.

A prior art publication in the technical field of the present invention may be referred to as EP2991534B1 among others, the document disclosing a household appliance having improved height profile adjustable feet.

An objective of the present invention is to prevent the household appliance from being freed off the feet mechanism and at the same time protecting the feet mechanism from getting damaged due to the weight as the height of the household appliance is being changed.

The household appliance realized in order to attain the aim of the present invention, explicated in the first claim and the respective claims thereof, comprises a body, plurality of feet attached to the bottom of the body, elevating the body from the ground. A vertical shaft is attached to each of the feet and extends in vertical direction towards the body. A foot mechanism is placed onto the feet wherein the vertical shaft passes through. A horizontal shaft passes through at least two feet mechanism in horizontal direction and along the depth of the household appliance, mechanically connecting the foot mechanisms. An end of the horizontal shaft is exposed on the bottom front section of the body via which the user rotates the horizontal shaft. A screw gear is placed inside the foot mechanism and mainly comprises of two parts, the parts being a first gear and a second gear. The first gear and the second gear are splined to each other and are configured to rotate together. The vertical shaft and the horizontal shaft pass through the first gear and the second gear respectively. Meaning that the rotational axes of the first gear and the second gear are perpendicular and parallel to the ground respectively. Upon rotating the horizontal shaft, the second gear starts to rotate along with the horizontal shaft, transferring the rotation to the first gear. The vertical shaft has a threaded surface and upon rotation of the first gear, the first gear starts to climb up along the vertical shaft and abuts against the foot mechanism. Should the rotation of the horizontal shaft continue, the first gear forces the foot mechanism to move upwards along the vertical shaft. The foot mechanisms are attached to the body of the household appliance. In other words, as the foot mechanisms move upwards, the body is elevated to a higher height or depending on the direction of rotation the body is lowered to a lower height. Therefore, the user can change the elevation of the household appliance. A support plate is provided so as to extend in parallel with the vertical shaft and is connected to the shaft via a bolt. By means of the support plate, structural support and strength is provided for the vertical shaft. Therefore, the vertical shaft is protected from getting damaged or bent. By means of the bolt, the foot mechanism is prevented from getting tipped over the vertical shaft, should the user rotate the horizontal shaft more than the allowed length provided by the vertical shaft. As a result, structural strength is provided for the height adjusting foot mechanism and safety of the household appliance is improved.

The household appliance of the present invention comprises the support plate wherein the support plate originates from the foot mechanism. The support plate, preferably in the shape of a rectangle, is attached onto the foot mechanism, extending parallel and in close vicinity of the vertical shaft.

The household appliance of the present invention comprises the bolt wherein the bolt connects the support plate to the vertical shaft in close vicinity of the upper terminal points. Therefore, the height difference between the lowermost and the uppermost position the household appliance can be secured increases, providing flexible use for the user.

The household appliance of the present invention comprises a washer placed onto the foot mechanism and through which the vertical shaft passes through. The washer abuts against the bolt in the uppermost position of the household appliance. The washer levels the foot mechanism in the uppermost position of the household appliance and also provides further structural support for the foot mechanism.

The household appliance of the present invention comprises a groove in the form of a slit provided along the support plate. The washer comprises a protrusion wherein the protrusion is placed inside the groove. As the foot mechanism and therefore the washer move upwards along the vertical shaft, the protrusion slides along and inside the groove. The protrusion provides guiding for the washer.

The household appliance of the present invention comprises the foot mechanism wherein the foot mechanism comprises a lower part and an upper part. Both of the lower part and the upper part has a bore wherein the vertical shaft passes.

The household appliance of the present invention comprises the lower part and the upper part wherein the upper part after being placed onto the lower part forms a circular conduit. The circular conduit is used as a bedding means for the second gear.

The household appliance of the present invention is a household appliance.

In the household appliance of the present invention, the strength of the foot mechanism is improved via the support plate and meanwhile by use of the bolt the possibility of the foot mechanism getting freed from the vertical shaft is eliminated which in turn improves stability and the safety of the household appliance.

The drawings are not meant to delimit the scope of protection as identified in the claims nor should they be referred to alone in an effort to interpret the scope identified in the claims without recourse to the technical disclosure in the description of the present invention.

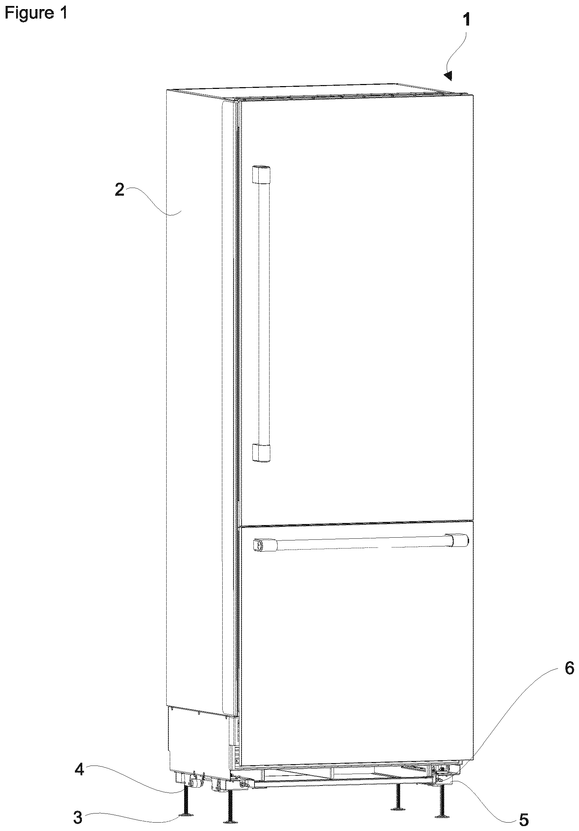

Figure 1 - is a side view of the household appliance

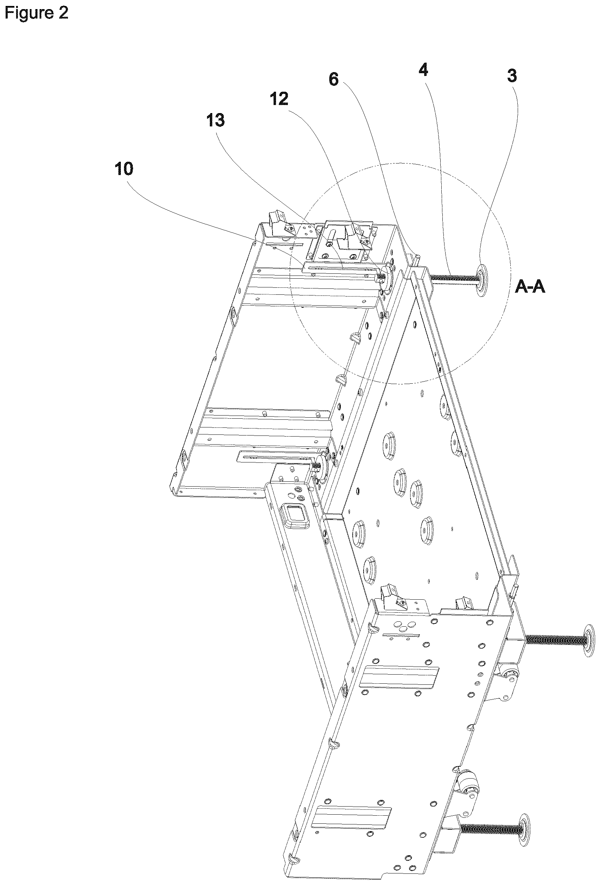

Figure 2 - is a side view of the bottom of the household appliance

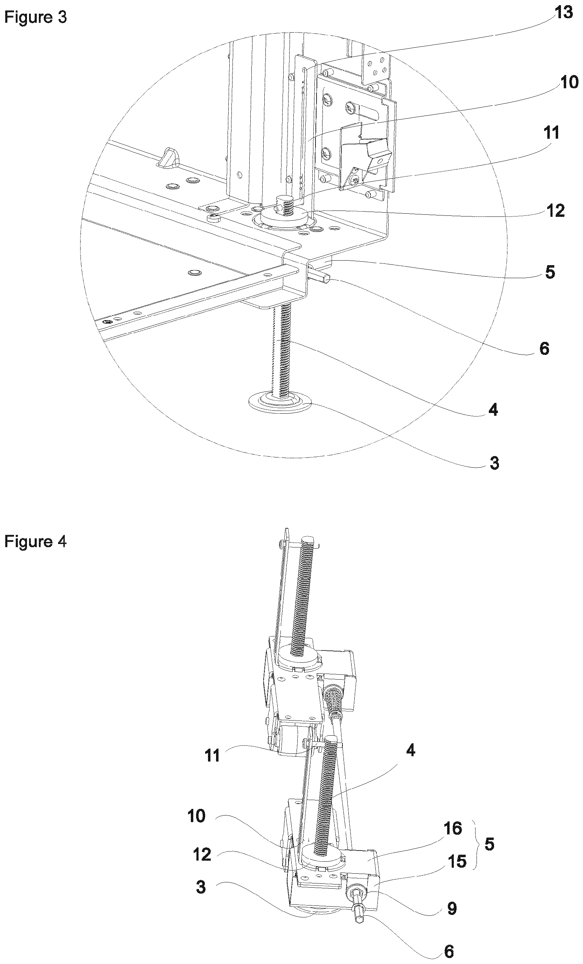

Figure 3 - is an enlarged view of the dashed line A-A in Figure 2
Figure 4 - is an isolated view of the foot mechanisms

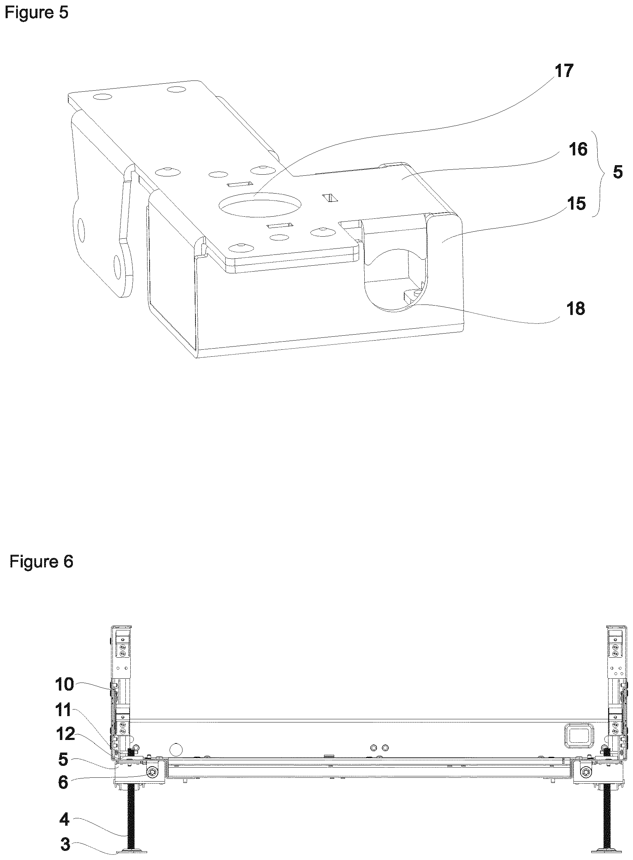

Figure 5 - is an isolated view of the foot mechanism
Figure 6 - is a side view of the bottom of the household appliance

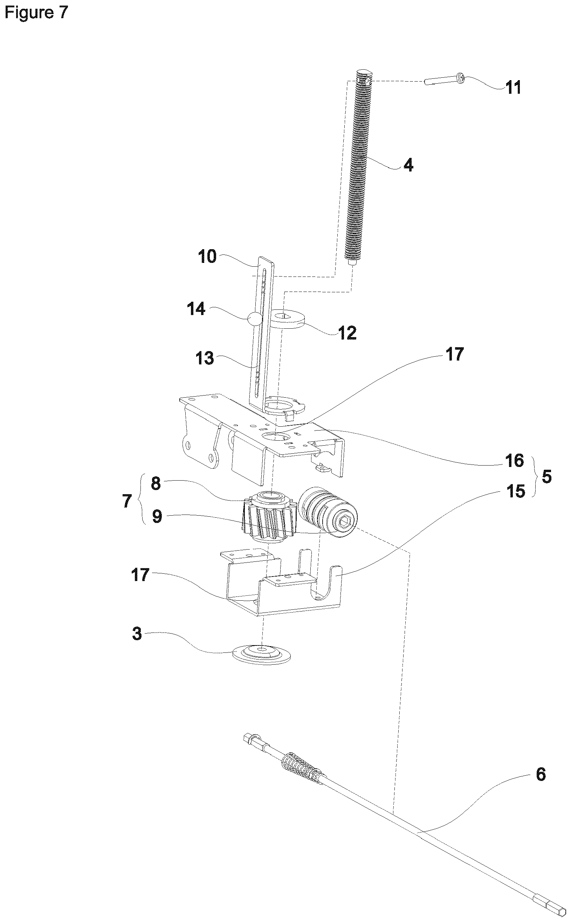

Figure 7 - is an exploded view of the foot mechanism

The following numerals are assigned to different parts demonstrated in the drawings and referred to in the present detailed description of the invention:
1. Household appliance
2. Body
3. Foot
4. Vertical shaft
5. Foot mechanism
6. Horizontal shaft
7. Screw gear
8. First gear
9. Second gear
10. Support plate
11. Bolt
12. Washer
13. Groove
14. Protrusion
15. Lower part
16. Upper part
17. Bore
18. Conduit

The present invention relates to a household appliance (1) comprising; a body (2), a plurality of feet (3), a threaded vertical shaft (4) extending in vertical direction and originating from each of the feet (3), a foot mechanism (5) placed on to the respective feet (3) wherein the vertical shaft (4) passes through, a horizontal shaft (6) passing through and mechanically coupling the foot mechanisms (5) along the depth of the cooling appliance (1) wherein the horizontal shaft (6) is exposed on the bottom front section of the body (2), a screw gear (7) inside the foot mechanism (5), comprising a first gear (8) and a second gear (9) splined to each other and are configured to rotate around axes perpendicular to each other and into which the vertical shaft (4) and the horizontal shaft (6) are respectively and form fittingly inserted, wherein the first gear (8) abuts against and forces the foot mechanisms (5) to move upwards along the vertical shaft (4) upon rotation of the horizontal shaft (6).

The present invention relates to a household appliance (1) further comprising; a support plate (10) extending in parallel with the vertical shaft (4) and by a bolt (11) connecting the support plate (10) to the vertical shaft (4). The household appliance (1) comprises the body (2) wherein the body (2) is placed onto the ground via the plurality of foot (3). Preferably, the feet (3) are placed under each corner of the household appliance (1). The vertical shaft (4) that is extending in a perpendicular direction is placed onto each feet (3). The foot mechanism (5) is placed onto the feet (3) and the vertical shaft (4) passes through. The vertical shaft (4) is threaded so as to be coupled with gears. The horizontal shaft (6) connects at least two foot mechanisms (5) by passing through the said foot mechanisms (5). A part of the horizontal shaft (6) is exposed on the bottom front surface of the household appliance (1) via which the user may rotate the horizontal shaft (6). The screw gear (7) is placed inside the foot mechanisms (5) and mainly comprises of two parts, the parts being; the first gear (8) and the second gear (9) wherein the said gears (8,9) are splined to each other. The first gear (8) rotates around a first axis which is perpendicular to the ground whereas the second gear (9) rotates around a second axis which is parallel to the ground. The first axis and the second axis are perpendicular to each other. The vertical shaft (4) passes through the first gear (8) and is coupled with the first gear (8) via the threads provided along its length. The horizontal shaft (6) passes through the second gear (9) and are configured to rotate together with the second gear (9) around the second axis. Upon rotating the horizontal shaft (6), the second gear (9) starts to rotate which in turn forces the first gear (8) to rotate as they are splined to each other. The first gear (8) has a canal extending through its central axis having threads configured to match with the threads provided along the length of the vertical shaft (4). The vertical shaft (4) is unmovable attached onto the foot (3) meaning that the first gear (8) climbs along the vertical shaft (4) as it rotates. The first gear (8) abuts against the foot mechanism (5) from inside and forces it to move in a vertical direction as the horizontal shaft (6) rotates. The horizontal shaft (6) extends along the depth of the household appliance (1) linearly and passes through multiple foot mechanisms (5) therefore activating multiple foot mechanisms (5) at the same time. The support plate (10) is provided so as to extend parallel with the vertical shaft (4). As the elevation of the foot mechanism (5) increases, the support plate (10) and the vertical shaft (4) remains parallel. The foot mechanism (5) is attached to the body (2) therefore as the foot mechanism (5) moves upwards so does the household appliance (1). The bolt (11) extends in between the support plate (10) and the vertical shaft (4) connecting them to each other. A major advantageous effect of using the support plate (10) is that it structurally supports the vertical shaft (4) therefore protecting the vertical shaft (4) from bending. The bolt (11) bars the foot mechanism (5) from exceeding a predetermined elevation. By this means, the foot mechanism (5) remains seated onto the vertical shaft (4) eliminating the possibility of the foot mechanism (5) getting off the vertical shaft (4).

In another embodiment, the support plate (10) originates from the foot mechanism (5).

In another embodiment, the support plate (10) is formed onto the body (2) of the household appliance (1). The support plate (10) is formed on the bottom side section of the body.

In another embodiment, the bolt (11) connects the support plate (10) to the vertical shaft (4) in close vicinity of the respective upper terminal points of the support plate (10) and the vertical shaft (4). The bolt (11) is used as a means of limiting the vertical movement of the foot mechanism (5). The bolt (11) is configured to extend between the upper terminal points of the support plate (10) and the vertical shaft (4). Therefore, total elevation of the household appliance (1) can be increased.

In another embodiment, a washer (12) placed on to the feet mechanism (5), through which the vertical shaft (4) passes through. The washer (1) upon abutting against the bolt (11) stops the movement of the foot mechanism (5).

In another embodiment, a groove (13) extending almost along the support plate (10) in vertical direction into which a protrusion (14) originating from the washer (12) is slidably placed. The groove (13) extends along the support plate (5) forming a slit along it. The washer (12) comprises the protrusion (14) which moves slidably inside the groove (13) therefore guiding the movement of the washer (12).

In another embodiment, the foot mechanism (5) comprises a lower part (15) and an upper part (16) each having a bore (17) arranged to be coaxial with the first gear (8) through which the vertical shaft (4) passes. The foot mechanism (5) is mainly composed of the lower part (15) and the upper part (16). Both the lower part (15) and the upper part (16) have the bore (17) configured to lie along the first axis through which the vertical shaft (4) passes through.

In another embodiment, the upper part (16) upon placement onto the lower part (15) forms a circular conduit (18) serving as a bedding means for the second gear (9). The circular conduit (18) is in the form of a canal and extends parallel to the ground. The second gear (9) has circular ends used to rotatably attach the second gear (9) inside the circular conduit (18). The circular conduit (18), the second gear (9) and the horizontal shaft (6) are concentric and coincides with then second axis. By this means, a robust assembly is achieved.

In a preferred embodiment the household appliance (1) is a cooling appliance.

In the household appliance (1) of the present invention, the height of the household appliance (1) can be adjusted via the horizontal shaft (6) extending along the depth of the household appliance (1) wherein the horizontal shaft (6) is exposed on the bottom front section of the body (2) which upon being rotated forces the foot mechanisms (5) to move upwards and wherein the upward movement of the foot mechanisms (5) is limited by the bolt (11) therefore eliminating the possibility of the foot mechanism (5) getting off the vertical shaft (4). Also the support plate (10) protects the vertical shaft (4) from bending.

## Claims

1. A household appliance (1) comprising;
a body (2),
a plurality of feet (3),
a threaded vertical shaft (4) extending in vertical direction and originating from each of the feet (3),
a foot mechanism (5) placed on to the respective feet (3) wherein the vertical shaft (4) passes through,
a horizontal shaft (6) passing through and mechanically coupling the foot mechanisms (5) along the depth of the appliance (1) wherein the
horizontal shaft (6) is exposed on the bottom front section of the body (2),
a screw gear (7) inside the foot mechanism (5), comprising a first gear (8) and a second gear (9) splined to each other and are configured to rotate around axes perpendicular to each other and into which the vertical shaft (4) and the horizontal shaft (6) are respectively and form fittingly inserted, wherein the first gear (8) abuts against and forces the foot mechanisms (5) to move upwards along the vertical shaft (4) upon rotation of the horizontal shaft (6),
**characterized by**
a support plate (10) extending in parallel with the vertical shaft (4) and by a bolt (11) connecting the support plate (10) to the vertical shaft (4).

2. A household appliance (1) according to claim 1, **characterized in that** the support plate (10) originates from the foot mechanism (5).

3. A household appliance (1) according to any of the preceding claims, **characterized in that** the bolt (11) connects the support plate (10) to the vertical shaft (4) in close vicinity of the respective upper terminal points of the support plate (10) and the vertical shaft (4).

4. A household appliance (1) according to any of the preceding claims, **characterized by** a washer (12) placed on to the foot mechanism (5), through which the vertical shaft (4) passes through.

5. A household appliance (1) according to claim 4, **characterized by** a groove (13) extending almost along the support plate (10) in vertical direction into which a protrusion (14) originating from the washer (12) is slidably placed.

6. A household appliance (1) according to any of the preceding claims, **characterized in that** the foot mechanism (5) comprises a lower part (15) and an upper part (16) each having a bore (17) arranged to be coaxial with the first gear (8) through which the vertical shaft (4) passes.

7. A household appliance (1) according to claim 6, **characterized in that** the upper part (16) upon placement onto the lower part (15) forms a circular conduit (18) serving as a bedding means for the second gear (9).

8. A household appliance (1) according to claim 1, **wherein the** household appliance (1) is a cooling appliance.

## Patentansprüche

1. Ein Haushaltsgerät (1) **umfasst**
einen Körper (2),
mehrere Füße (3),
eine mit Gewinde versehene vertikale Welle (4), die sich in vertikaler Richtung erstreckt und von jedem der Füße (3) hinausragt,
einen Fußmechanismus (5), der auf den jeweiligen Füßen (3) angeordnet ist, wodurch die vertikale Welle (4) hindurchgeht,
eine horizontale Welle (6), die durch die Fußmechanismen (5) entlang der Tiefe des Haushaltsgeräts (1) verläuft und diese mechanisch koppelt, wobei die horizontale Welle (6) am unteren vorderen Abschnitt des Körpers (2) freiliegt,
ein Schraubenzahnrad (7), der innerhalb des Fußmechanismus (5) liegt und ein erstes Zahnrad (8) und ein zweites Zahnrad (9) umfasst, die miteinander verzahnt und so konfiguriert sind, dass sie sich um zueinander senkrechte Achsen drehen und in die die vertikale Welle ( 4) und die horizontale Welle (6) jeweils formschlüssig eingesetzt sind, wobei das erste Zahnrad (8) gegen die Fußmechanismen (5) anstößt und diese dazu zwingt, sich entlang der vertikalen Welle (4) bei Drehung der horizontalen Welle (6) nach oben zu bewegen,
**gekennzeichnet ist es durch**
eine Stützplatte (10), die sich parallel zur vertikalen Welle (4) erstreckt und durch einen Bolzen (11) die Stützplatte (10) mit der vertikalen Welle (4) verbindet.

2. Ein Haushaltsgerät (1), wie in Anspruch 1 aufgeführt, **ist dadurch gekennzeichnet, dass** die Stützplatte (10) von der Fußmechanik (5) ausgeht.

3. Ein Haushaltsgerät (1), wie in einem der vorherigen Ansprüchen aufgeführt, **ist dadurch gekennzeichnet, dass** der Bolzen (11) die Stützplatte (10) mit der vertikalen Welle (4) in unmittelbarer Nähe der jeweiligen oberen Endpunkte der Stützplatte (10) und der vertikalen Welle (4) verbindet.

4. Ein Haushaltsgerät (1), wie in einem der vorherigen Ansprüchen aufgeführt, **ist dadurch gekennzeichnet, dass** eine auf den Fußmechanismus (5) aufgesetzte Unterlegscheibe (12) durch die die vertikale Welle (4) hindurchgeht.

5. Ein Haushaltsgerät (1), wie in Anspruch 4 aufgeführt, **ist dadurch gekennzeichnet, dass** sich eine Nut (13) nahezu entlang der Stützplatte (10) in vertikaler Richtung erstreckt, in die ein Vorsprung (14), der von der Unterlegscheibe (12) stammt, verschiebbar angeordnet ist.

6. Ein Haushaltsgerät (1), wie in einem der vorherigen Ansprüchen aufgeführt, **ist dadurch gekennzeichnet, dass** der Fußmechanismus (5) aus einem Unterteil (15) und einem Oberteil (16) besteht, die jeweils eine koaxial zum ersten Zahnrad (8) angeordnete Bohrung (17) aufweisen, durch die die vertikale Welle (4) hindurchtretet.

7. Ein Haushaltsgerät (1), wie in Anspruch 6 aufgeführt, **ist dadurch gekennzeichnet, dass** das Oberteil (16) beim Aufsetzen auf das Unterteil (15) einen Ringkanal (18) bildet, der als Lagermittel für das zweite Zahnrad (9) dient.

8. Ein Haushaltsgerät (1), wie in Anspruch 1 aufgeführt, ist ein Kühlgerät (1).

## Revendications

1. Un appareil électroménager (1) comprenant ;
un corps (2),
une pluralité de pieds (3),
un axe vertical fileté (4) s'étendant dans la direction verticale et provenant de chaque pied (3),
un mécanisme de pied (5) placé sur les pieds respectifs (3) dans lequel l'axe vertical (4) passe à travers,
un axe horizontal (6) traversant et accouplant mécaniquement les mécanismes de pied (5) le long de la profondeur de l'appareil électroménager (1) dans lequel l'axe horizontal (6) est exposé sur la section avant inférieure du corps (2),
un engrenage à vis (7) à l'intérieur du mécanisme de pied (5), comprenant un premier engrenage (8) et un second engrenage (9) cannelés l'un avec l'autre, et configurés de manière à tourner autour des axes qui sont perpendiculaires l'un à l'autre, et dans lesquels l'axe vertical (4) et l'axe horizontal (6) sont insérés respectivement et de manière ajustée, dans lequel le premier engrenage (8) est en butée contre les mécanismes de pied (5) et force ceux-ci à se déplacer vers le haut, le long de l'axe vertical (4), lors de la rotation de l'axe horizontal (6),
**caractérisé par**
une plaque de support (10) s'étendant parallèlement à l'axe vertical (4) et par un boulon (11) reliant la plaque de support (10) à l'axe vertical (4).

2. Un appareil électroménager (1) selon la revendication 1, **caractérisé en ce que** la plaque de support (10) prend origine du mécanisme de pied (5).

3. Un appareil électroménager (1) selon l'une quelconque des revendications précédentes, **caractérisé en ce que** le boulon (11) relie la plaque de support (10) à l'axe vertical (4) à proximité immédiate des points terminaux supérieurs respectifs de la plaque de support (10) et de l'axe vertical (4).

4. Un appareil électroménager (1) selon l'une quelconque des revendications précédentes, **caractérisé par** une rondelle (12) placée sur le mécanisme de pied (5), à travers laquelle passe l'axe vertical (4).

5. Un appareil électroménager (1) selon la revendication 4, **caractérisé par** une rainure (13) s'étendant presque le long de la plaque de support (10) en direction verticale dans laquelle une saillie (14) provenant de la rondelle (12) est placée de manière coulissante.

6. Un appareil électroménager (1) selon l'une quelconque des revendications précédentes, **caractérisé en ce que** le mécanisme de pied (5) comprend une partie inférieure (15) et une partie supérieure (16) comportant chacune un trou (17) agencé pour être coaxiaux avec le premier engrenage (8) à travers lequel passe l'axe vertical (4).

7. Un appareil électroménager (1) selon la revendication 6, **caractérisé en ce que** le placement de la partie supérieure (16) sur la partie inférieure (15) forme un conduit circulaire (18) servant de moyen de couchage pour le deuxième engrenage (9).

8. Un appareil électroménager (1) selon l'une quelconque des revendications précédentes, où l'appareil électroménager (1) est un appareil de réfrigération.
